# EUROPEAN PATENT APPLICATION

(11) **EP 3 926 009 A1**
(43) Date of publication of application: **22.12.2021**
(21) Application number: 21179497.9
(22) Date of filing: 15.06.2021
(51) Int. Cl.: C08L 15/00, C08L 91/00, C08K 3/36, C08K 3/04, C08L 9/00, B60C 1/00, C08K 3/06, C08L 25/16, C08L 93/04

(54) **A RUBBER COMPOSITION AND A TIRE**

(30) Priority: 19.06.2020 US 202063041228 P; 08.06.2021 US 202117341584
(71) Applicant: The Goodyear Tire & Rubber Company, Akron, OH 44316 (US)
(72) Inventor: ENGELDINGER, Eric, 8508 Redange-sur-Attert (LU); WEYDERT, Marc, 8064 Bertrange (LU)
(74) Representative: Goodyear IP Law

(57) **Abstract**

The present invention is directed to a rubber composition comprising 80 phr to 100 phr of at least one solution polymerized styrene-butadiene rubber, 0 phr to 20 phr of at least one polybutadiene, 55 phr to 200 phr of a filler, at least 15 phr of oil, wherein the filler to oil ratio by weight is between 3.5:1 and 8.0:1, and wherein the weight average molecular weight (Mw) of the at least one solution polymerized styrene-butadiene rubber is within a range of 400,000 to 1,000,000 g/mol. Moreover, the present invention is directed to a tire comprising such a rubber composition as well as a method of making a rubber composition.

## Description

### Field of the Invention

The present invention relates to a rubber composition, preferably a non-vulcanized rubber composition, for a rubber product, such as a tire.

### Background of the Invention

Ultra-high performance (UHP) tires are designed to provide superior grip (traction characteristics to both wet and dry pavements) and handling performance. In addition to these high performance properties there is also an increasing demand for improved rolling resistance properties suitable for improved fuel efficiency and reduced energy consumption. In achieving these objectives it is also important for tire tread wear to not be compromised and to be maintained at an acceptable level. While improvements have been made in this field of tire performance over the past years, significant room for improvement is still left for the development of advanced UHP tires.

### Summary of the Invention

One object of the present invention may be to provide a rubber composition with advanced rolling resistance properties.

Another object of the invention may be to provide a rubber composition comprising a limited amount of material.

Another object of the invention may be to provide a rubber composition which supports limited treadwear.

Another object of the invention may be to provide a cost effective rubber composition.

The scope of protection of the present invention is defined by the independent claim.

The dependent claims refer to preferred embodiments of the invention. Further preferred embodiments are recited in the aspects and embodiments provided in the summary and description herein below.

Thus, in a first aspect of the invention, the present invention is directed to a rubber composition comprising from 80 phr to 100 phr of at least one solution polymerized styrene-butadiene rubber (SSBR), 0 phr to 20 phr of at least one polybutadiene, 55 phr to 200 phr of a filler, at least 15 phr of oil, wherein the (total) filler to oil ratio by weight is between 3.5:1 and 8.0:1, and wherein the weight average molecular weight (Mw) of the at least one solution polymerized styrene-butadiene rubber is at most 1 000 000 (determined by GPC according to ASTM D5296-11). The above combination of relatively high filler to oil ratio with said limited weight average molecular weight of the solution polymerized styrene butadiene rubber(s) helps to provide a good rolling resistance of the composition.

In one embodiment, the weight average molecular weight of the at least one solution polymerized styrene-butadiene rubber is at least 400,000 (preferably within the range of 550,000 to 1,000,000).

The weight average molecular weight (Mw) is determined using gel permeation chromatography (GPC) according to ASTM 5296-11, using polystyrene calibration standards. For further explanations, reference is made to ASTM 5296-11 and/or Saviour A. Umoren and Moses M. Solomon, Polymer Characterization: Polymer Molecular Weight Distribution, March 2016, in Polymer Science, pages 412-419, in particular sections 2 and 3.3.1.

In another embodiment, said filler to oil ratio is within the range of 3.5:1 and 8:1, or 4:1 to 8:1, or 4:1 to 7:1, or 3.5:1 to 6:1, or 4:1 to 6:1. In another embodiment, the filler to oil ratio can be within the range of 1:1 to 3:1.

In another embodiment, the at least one solution polymerized styrene-butadiene rubber has a bound styrene content within a range of 20% to 50% or 25% to 40%, or 25% to 35%, and a vinyl microstructure content which is within the range of 10% to 50% (RHC).

In another embodiment, the at least one solution polymerized styrene-butadiene rubber has a glass transition temperature within a range of -10°C to -50°C.

In another embodiment, the rubber composition comprises between 15 phr and 45 phr of oil, preferably between 20 phr and 40 phr of oil.

In another embodiment, the at least one solution polymerized styrene-butadiene rubber is end functionalized. Such a feature may be of particular interest in view of the relatively small weight average molecular weight of the polymers which results in higher functional density, or in other words more functional groups, per weight.

In still another embodiment, the at least one solution polymerized styrene-butadiene rubber is end functionalized with an aminosilane functional group and/or an aminosiloxane functional group. For instance, the styrene-butadiene rubber can be functionalized with an alkoxysilane functional group as described in United States Patent 10,570,275 B2. The teachings of United States Patent 10,570,275 B are incorporated herein by reference for the purpose of describing such alkoxysilane functional groups and methods for incorporating them into synthetic rubber.

In another embodiment, the styrene-butadiene rubber can be functionalized by terminating an anionic polymerization employed in synthesizing the polymer chains of the polymer with a terminator of the structural formula: 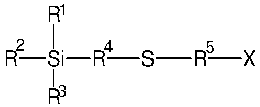
wherein R¹, R², and R³ are independently C₁ to C₈ alkyl groups or C₁ to C₈ alkoxy groups with the provison that at least two of R¹, R², and R³ are C₁ to C₈ alkoxy groups;
wherein R⁴ is a C₁ to C₈ alkanediyl group, a C₁ to C₈ arylene group, a C₁ to C₈ alkylarylene group, or a C₁ to C₈ arylalkanediyl group; Si is silicon; S is sulfur;
wherein X represents -O-R⁶ or 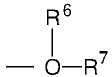 wherein (i) R⁵ represents -(CH₂)₂-C(=O)- wherein the (CH₂)₂ group is adjacent to the sulfur and R⁶ and R⁷ are independently hydrogen atoms or C₁ to C₈ alkyl groups, C₁ to C₈ aryl groups, C₁ to C₈ alkylaryl groups, or C₁ to C₈ arylalkyl group; or (ii) R⁵ and R⁶ taken together with the heteroatom nitrogen or heteroatom oxygen to which both R⁵ and R⁶ are attached to form a 5 membered ring wherein R⁵ represents -CH-C(=O)- wherein the carbonyl group is adjacent to the heteroatom and R⁶ represents -CH2-C(=O)- wherein the carbonyl group is adjacent to the heteroatom and R⁷ represents a hydrogen atom or C₁ to C₈ alkyl groups, C₁ to C₈ aryl groups, C₁ to C₈ alkylaryl groups, or C₁ to C₈ arylalkyl groups. Accordingly, the functionalized styrene-butadiene rubber is the reaction produce of the living styrene-butadiene copolymer and the polymerization terminator. Such functionalized elastomers and techniques for their synthesis are described in greater detail in United States Patent 8,993,669 B2. The teachings of United States Patent 8,993,669 B2 are incorporated hereby by reference for the purpose of describing such polymerization terminators and their use in making functionalized rubbers. The styrene-butadiene rubbers utilized in the practice of this invention can also be functionalized with the polymerization terminators described in United States Patent 9,109,103 B2. The teachings of United States Patent 9,109,103 B2 are also incorporated hereby by reference for the purpose of described such polymerization terminators and their use in making functionalized rubbers.

In another embodiment of this invention, the styrene-butadiene rubber can be functionalized by polymerizing functionalized monomers into the backbone of the rubber. Such functionalized monomers are described in United States Patent 6,627,721 B1, United States Patent 6,927,269 B2, United States Patent 6,927,269 B2, and United States Patent 7,041,761 B2. The teachings of United States Patent 6,627,721 B1, United States Patent 6,927,269 B2, United States Patent 6,927,269 B2, and United States Patent 7,041,761 B2 are incorporated by reference for the purpose of disclosing such monomers and techniques for polymerizing them into functionalized rubbery polymers.

The functionalization of the styrene-butadiene rubber with various amine and/or, silicon containing groups, such as aminosilane groups and aminosiloxane groups typically improves filler (in particular silica)/rubber interaction.

In still another embodiment, the composition comprises at least two solution polymerized styrene-butadiene rubbers wherein a first solution polymerized styrene-butadiene rubber has a glass transition temperature within a range of -20°C to -89°C, preferably -20°C to -85°C (preferably to -50°C) or -50°C to -79°C and a second solution polymerized styrene-butadiene rubber has a glass transition temperature within a range of -5°C to -35°C, preferably to -20°C.

In still another embodiment, the rubber composition comprises from 5 phr to 15 phr of polybutadiene. Provision of polybutadiene in said amount helps to adjust the desired compound glass transition temperature.

In still another embodiment, the polybutadiene has a glass transition temperature within a range of -90°C to -110°C, preferably -101°C to -109°C.

In still another embodiment, the rubber composition comprises at least 70 phr of silica, preferably even more than 90 phr of silica, and optionally up to 150 phr silica (or lower amounts if required by the defined oil to filler ratio).

In still another embodiment, the at least one solution polymerized styrene-butadiene rubber is an oil-extended, solution polymerized styrene-butadiene rubber, wherein said oil extension is at most 35 phr (preferably at most 30 phr) per 100 parts (by weight) of the solution polymerized styrene-butadiene rubber. In other words, said oil extension is at most 35 parts by weight (preferably at most 30 parts by weight) per 100 parts (by weight) of the solution polymerized styrene-butadiene rubber. Of course, the composition may comprise also different amounts than 100 phr of solution polymerized styrene-butadiene rubber. In an example, 130 phr of oil extended SSBR with an oil extension of 30 phr correspond to 100 phr of SSBR and 30 phr of extension oil. Optionally, the amount of extension is at least 5 parts by weight, or preferably at least 10 parts by weight, of extension oil per 100 parts (by weight) of the solution polymerized styrene-butadiene rubber.

It has further been found that a reduction of oil extension of the utilized oil-extended, solution polymerized styrene-butadiene rubber allows to reduce also the filler content, in particular in combination with a limited weight average molecular weight (Mw) of the solution polymerized styrene-butadiene rubber, compared to a higher weight average molecular weight polymer.

In still another embodiment, the at least one solution polymerized styrene-butadiene rubber is oil-extended and at least 70% (preferably at least 80%) of the oil in the rubber composition (by weight) is extension oil of the solution polymerized styrene-butadiene rubber.

In yet another embodiment, at least 70% of the filler by weight is silica.

In still another embodiment, the rubber composition is a sulfur-vulcanizable rubber composition. Typically, such a composition can comprise also sulfur, and/or at least one sulfur vulcanization accelerator.

In still another embodiment, the rubber composition further comprises from 10 phr to 50 phr of a resin.

In still another embodiment, said resin is a traction resin or traction promoting resin and/or at least one selected from styrene/alphamethylstyrene resin, coumarone-indene resin, petroleum hydrocarbon resin, terpene polymer, terpene phenol resin and rosin derived resin and copolymers thereof and hydrogenated rosin acid.

In still another embodiment, a ratio by weight of the resin to the oil is within a range of 10:1 to 1:3, preferably of 1:1 to 1:3 (in other words 1 to 1/3). Preferably, said ratio is within a range of 1:1 to 1:2.5 (in other words 1 to 0.4), or even more preferably, within a range of 1:1 to 1:2 (in other words 1 to 0.5).

In an embodiment, the rubber composition may include at least one and/or one or more additional diene-based rubbers or elastomers. Representative synthetic polymers may be the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubbers or elastomers may be in general natural rubber, synthetic polyisoprene, polybutadiene and SBR including SSBR and ESBR. In another embodiment, the composition may comprise at least two diene-based rubbers. For example, solution polymerization derived styrene-butadiene rubbers.

In another embodiment, a solution polymerization prepared SBR (SSBR) may for instance have a bound styrene content in a range of 5 to 50, preferably 9 to 36, percent. The SSBR can be conveniently prepared, for example, by anionic polymerization in an inert organic solvent. More specifically, the SSBR can be synthesized by copolymerizing styrene and 1,3-butadiene monomer in a hydrocarbon solvent utilizing an organo lithium compound as the initiator. In still another embodiment, the solution styrene butadiene rubber is a tin-coupled polymer. In still another embodiment, the SSBR is functionalized for improved compatibility with silica. In addition, or alternatively, the SSBR is thio-functionalized. This helps to improve the compound's hysteresis behavior, for example. Thus, for instance, the SSBR may be a thio-functionalized, tin-coupled solution polymerized copolymer of butadiene and styrene.

In one embodiment, a synthetic or natural polyisoprene rubber may be used. Synthetic cis-1,4-polyisoprene and natural rubber are as such well known to those having skill in the rubber art. In particular, the cis 1,4-microstructure content may be at least 90% and is typically at least 95% or even higher.

In one embodiment, cis-1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95 to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646, which are incorporated herein by reference.

A glass transition temperature, or Tg, of an elastomer or elastomer composition, where referred to herein, represents the glass transition temperature(s) of the respective elastomer or elastomer composition in its uncured state or possibly a cured state in the case of an elastomer composition. A Tg is determined as a peak midpoint by a differential scanning calorimeter (DSC) at a temperature rate of increase of 10°C per minute, according to ASTM D3418.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. In an example, the composition may further comprise from 1 phr to 10 phr, optionally from 1 to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "compound" and "composition" and "formulation" may be used herein interchangeably, unless indicated otherwise.

In an embodiment, oil, in particular processing oil, may be included in the rubber composition as extending oil used to extend the elastomers. Processing oil may also be included in the rubber composition by addition of the oil directly during rubber compounding. The processing oil used may include both extending oil present in the elastomers, and process oil added during compounding. Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils.

In an embodiment, the rubber composition may include silica. Commonly employed siliceous pigments which may be used in the rubber compound include for instance conventional pyrogenic and precipitated siliceous pigments (silica). In one embodiment, precipitated silica is used. The conventional siliceous pigments may be precipitated silicas such as, for example, those obtained by the acidification of a soluble silicate, e.g., sodium silicate. Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area can be suitably determined according to ASTM D6556 or equivalent and is described in the Journal of the American Chemical Society, Volume 60, Page 304 (1930). The conventional silica may also be characterized by having a dibutylphthalate (DBP) absorption value in a range of 100 cm³/100 g to 400 cm³/100 g, alternatively 150 cm³/1 00 g to 300 cm³/1 00 g, which can be suitably determined according to ASTM D 2414 or equivalent. A conventional silica might be expected to have an average ultimate particle size, for example, in the range of 0.01 to 0.05 micron as determined by the electron microscope, although the silica particles may be even smaller, or possibly larger, in size. Ranges of silica use could be for instance between 20 and 70 phr or 80 to 120 phr, optionally in addition to other fillers. Various commercially available silicas may be used, such as, only for example herein, and without limitation, silicas commercially available from PPG Industries under the Hi-Sil trademark with designations 210, 315G, EZ160G, etc; silicas available from Solvay, with, for example, designations Z1165MP and Premium200MP, etc.; and silicas available from Evonik AG with, for example, designations VN2 and Ultrasil 6000GR, 9100GR, etc.

In still another embodiment, the rubber composition may comprise pre-silanized and precipitated silica which may for instance have a CTAB adsorption surface area of between 130 m²/g and 210 m²/g, optionally between 130 m²/g and 150 m²/g and/or between 190 m²/g and 210 m²/g, or even between 195 m²/g and 205 m²/g. The CTAB (cetyl trimethyl ammonium bromide) method for determination of the silica surface area (ASTM D6845) is known to the person skilled in the art.

In another embodiment, pre-silanized, or in other words pre-hydrophobated, precipitated silica utilized is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes.

In an alternative embodiment, the pre-hydrophobated precipitated silica may be pre-treated with a silica coupling agent comprised of, for example, an alkoxyorganomercaptoalkoxysilane or a combination of alkoxysilane and organomercaptoalkoxysilane prior to blending the pre-treated silica with the rubber instead of reacting the precipitated silica with the silica coupling agent in situ within the rubber. For example, see United States Patent 7,214,731, the teachings of which are incorporated herein for the purpose of describing pre-hydrophobated precipitated silica and techniques for making such pre-hydrophobated precipitated silica.

In another embodiment, said pre-silanized precipitated silica is precipitated silica pre-reacted with a silica coupler comprised of bis(3-triethoxysilylpropyl)polysulfide containing an average of from 1 to 5 connecting sulfur atoms (preferably 2 to 4) in its polysulfidic bridge or an alkoxyorganomercaptosilane.

The mercaptosilane with its -SH groups may improve compatibility with the rubber material or rubber matrix and/or support the curing process.

The amount of mercapto groups on the surface of the silica may be in the range of between 0.1 and 1 weight percent, alternatively 0.4 to 1 weight percent or 0.4 to 0.6 weight percent.

In addition to mercapto groups coupled to the silica, the silica may comprise a compatibilizer which is typically a (hydro-)carbon chain material having multiple carbon atoms (for instance at least 4 carbon atoms) along its chain. Such a compatibilizer may facilitate the mixing of the composition. In an example, the weight % of carbon surface load/functionalization is between 2 and 10, or alternatively between 3 and 8.

Some non-limiting examples of pre-treated silicas (i.e., silicas that have been pre-surface treated with a silane) which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries. Some representative examples of preferred pre-silanized precipitated silicas include Agilon^{®} 400, Agilon^{®} 454 and Agilon^{®} 458 from PPG Industries.

In an embodiment, the rubber composition is exclusive of addition of (added) precipitated silica to the rubber composition (thereby exclusive of addition of non-pre-silanized precipitated silica).

In another embodiment, the pre-silanized silica is not necessarily precipitated silica.

In one embodiment, where the rubber composition contains added precipitated silica (in addition to said pre-silanized precipitated silica), said rubber composition contains added silica coupler (silica coupler added to said rubber composition), where said silica coupler has a moiety reactive with hydroxyl groups (e.g. silanol groups) on said precipitated silica and said pre-silanized precipitated silica and another different moiety interactive with the elastomers of the rubber composition. In one embodiment, said silica coupler added to said rubber composition is comprised of bis(3-triethoxysilylpropyl) polysulfide having an average of from about 2 to about 4 connecting sulfur atoms in its polysulfidic bridge.

Representative of the aforesaid silica coupler (silica coupling agent) having a moiety reactive with hydroxyl groups on pre-silanized precipitated silica and on precipitated silica and another moiety interactive with said elastomers, may be comprised of, for example: (A) bis(3-trialkoxysilylalkyl) polysulfide containing an average in range of from about 2 to about 4, alternatively from about 2 to about 2.6 or from about 3.2 to about 3.8, sulfur atoms in its connecting bridge, or (B) an alkoxyorganomercaptosilane, or (C) their combination. A representative example of such bis(3-trialkoxysilylalkyl) polysulfide is comprised of bis(3-triethoxysilylpropyl) polysulfide. As indicated, for the pre-silanized precipitated silica, the silica coupler may be desirably an alkoxyorganomercaptosilane. For the non-pre-silanized precipitated silica, the silica coupler may be desirably comprised of the bis(3-triethoxysilylpropyl) polysulfide.

In one embodiment, the rubber composition is exclusive of addition of silica coupler to the rubber composition (thereby exclusive of silica coupler).

As indicated, in one embodiment, the rubber composition may contain a combination of additional silica coupler added to the rubber composition, particularly a bis(3-triethoxysilylpropyl) polysulfide containing an average of from about 2 to about 4 connecting sulfur atoms in its polysulfidic bridge together with an additional precipitated silica (non-pre-silanized precipitated silica) added to said rubber composition, wherein the ratio of pre-silanized precipitated silica to said precipitated silica is desirably at least 8/1, alternately at least 10/1.

In an embodiment, the rubber composition may include carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 to 145 g/kg and a DBP number ranging from 34 cm³/100 g to 150 cm³/100 g. Iodine absorption values can be suitably determined according to ASTM D1510 or equivalent. Commonly employed carbon blacks can be used as a conventional filler in an amount ranging from 10 to 150 phr. In another embodiment, from 20 to 80 phr of carbon black may be used. In a preferred embodiment, the composition comprises less than 10 phr, preferably less than 5 phr carbon black.

In another embodiment, other fillers may be used in the rubber composition including, but not limited to, particulate fillers including ultra high molecular weight polyethylene (UHMWPE), crosslinked particulate polymer gels including but not limited to those disclosed in United States Patent 6,242,534, United States Patent 6,207,757, United States Patent 6,133,364, United States Patent 6,372,857, United States Patent 5,395,891, or United States Patent 6,127,488, and a plasticized starch composite filler including but not limited to that disclosed in United States Patent 5,672,639. Such other fillers may be used in an amount ranging from 1 to 30 phr.

In one embodiment, the rubber composition may contain conventional sulfur containing organosilicon compounds or silanes. Examples of suitable sulfur containing organosilicon compounds are of the formula:

Z - Alk - Sn - Alk - Z I

in which Z is selected from the group consisting of 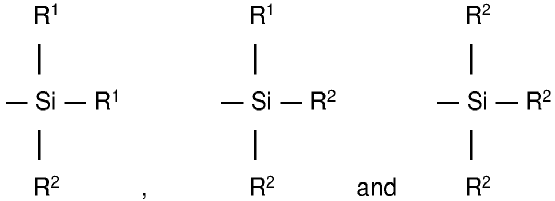 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 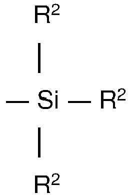 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively with a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be carried out over a period ranging from 1 minute to 20 minutes.

Vulcanization of the pneumatic tire of the present invention may for instance be carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

In a second aspect of the invention, the invention is directed to a tire comprising a rubber composition, wherein the rubber composition comprises from 80 phr to 100 phr of at least one solution polymerized styrene-butadiene rubber, 0 phr to 20 phr of at least one polybutadiene, 55 phr to 200 phr of a filler, at least 15 phr of oil, wherein the filler to oil ratio by weight is between 3.5:1 and 8.0:1 (preferably 6 :1), and wherein the weight average molecular weight Mw of the at least one solution polymerized styrene-butadiene rubber is at most 1,000,000.

The rubber composition may be incorporated in a variety of rubber components of the tire (or in other words tire components). For example, the rubber component may be a tread (including tread cap and tread base), sidewall, apex, chafer, sidewall insert, or innerliner.

The tire of the present invention may for example be a pneumatic tire or nonpneumatic tire, a race tire, a passenger tire, an aircraft tire, an agricultural tire, an earthmover tire, an off-the-road (OTR) tire, a truck tire, or a motorcycle tire. The tire may also be a radial or bias tire.

In a third aspect of the invention a method of making a rubber composition is provided, the method comprising at least one of the following steps:
A) providing at least one oil-extended solution polymerized styrene-butadiene rubber, said solution polymerized styrene-butadiene rubber having an Mw of at most 1 000 000 g/mol;
B) mixing said oil-extended solution polymerized styrene-butadiene rubber with a filler, preferably in at least one non-productive mixing step, wherein a ratio of the (total amount of) filler to the amount of oil in the rubber composition is between 3.5 : 1 and 8:1; and
C) adding sulfur, and optionally a vulcanization accelerator, preferably in a productive mixing step.

In one embodiment, the filler comprises at least 60% by weight of silica (at least 60 parts per hundred filler (phf), preferably at least 70 phf), wherein a part of the said silica is mixed with said oil-extended solution polymerized styrene-butadiene rubber in a first (non-productive) mixing step to obtain a first polymer composition and a second part of said silica is mixed with said first polymer composition in a second (non-productive) mixing step to obtain a second polymer composition. Optionally, one or more of a resin, a silane and an oil is added in the second mixing step to the first rubber composition.

In another embodiment, the amount of extension oil in the at least one oil-extended solution polymerized styrene-butadiene rubber is at least 70%, preferably at least 80%, of the total oil amount in the rubber composition.

In another embodiment, the 100 parts by weight of polymer are extended with at most 30 parts by weight of (extension) oil.

The features of the above aspects and/or embodiments may be combined with one another.

### Brief description of the drawings

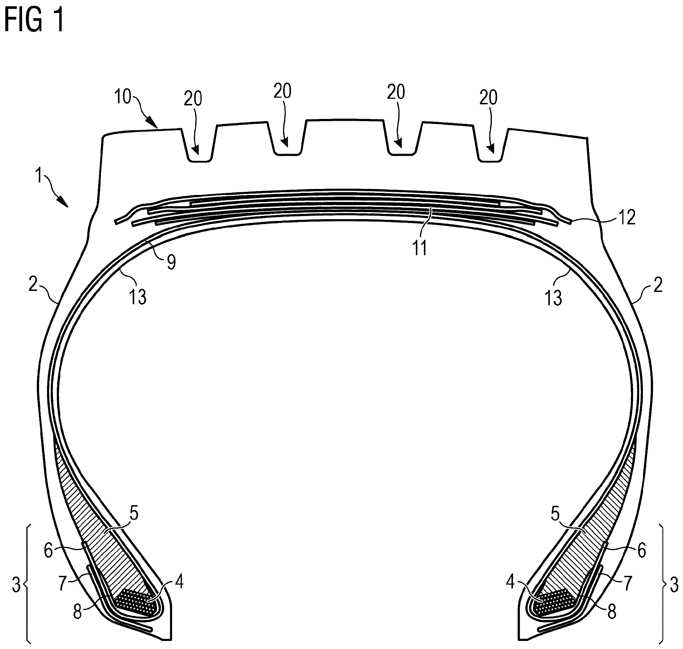

The structure, operation, and advantages of the invention will become more apparent upon contemplation of the following description taken in conjunction with the accompanying drawings, wherein
Figure 1 is a schematic cross section of a tire comprising a rubber component with the rubber composition in accordance with an embodiment of the present invention.

### Detailed Description of the Embodiments

Figure 1 is a schematic cross-section of a tire 1 according to an embodiment of the invention. The tire 1 has a plurality of tire components such as a tread 10, an innerliner 13, a belt comprising four belt plies 11, a carcass ply 9, two sidewalls 2, and two bead regions 3, bead filler apexes 5 and beads 4. The example tire 1 is suitable, for example, for mounting on a rim of a vehicle, e.g. a truck or a passenger car. As shown in Figure 1, the belt plies 11 may be covered by an overlay ply 12 and/or may include one or more breaker plies. The carcass ply 9 includes a pair of axially opposite end portions 6, each of which is associated with a respective one of the beads 4. Each axial end portion 6 of the carcass ply 9 may be turned up and around the respective bead 4 to a position to anchor each axial end portion 6. The turned-up portions 6 of the carcass ply 9 may engage the axial outer surfaces of two flippers 8 and axial inner surfaces of two chippers 7 which are also considered as tire components. As shown in Figure 1, the example tread 10 may have circumferential grooves 20, each groove 20 essentially defining a U-shaped opening in the tread 10. The main portion of the tread 10 may be formed of one or more tread compounds. Moreover, the grooves 20, in particular the bottoms and/or sidewalls of the grooves 20 could be reinforced by a rubber compound having a higher hardness and/or stiffness than the remaining tread compound. Such a reinforcement may be referred to herein as a groove reinforcement.

While the embodiment of Figure 1 suggests a plurality of tire components including for instance apexes 5, chippers 7, flippers 8 and overlay 12, such and further components are not mandatory for the invention. Also, the turned-up end of the carcass ply 9 is not necessary for the invention or may pass on the opposite side of the bead area 3 and end on the axially inner side of the bead 4 instead of the axially outer side of the bead 4. The tire could also have for instance a different number of grooves 20, e.g. less than four grooves.

For instance, the tread 10 of the tire may comprise a rubber composition in accordance with an embodiment of the invention. Table 1 shows in the Inventive Example a rubber composition in accordance with such an embodiment of the invention. It is compared with a Control Sample, which comprises a different SSBR with larger oil extension and higher molecular weight. Moreover, the Control Sample comprises larger amounts of silica and silane. The remaining ingredients of both compositions are essentially the same.

**TABLE 1**

| **Material** | **Parts by weight (phr)** | |
|---|---|---|
| | **Control Sample** | **Inventive Example** |
| SSBR¹ | 103.2 | 0 |
| SSBR² | 0 | 93.75 |
| Polybutadiene³ | 25 | 25 |
| Silica⁴ | 112 | 105 |
| Silane⁵ | 11 | 10.5 |
| Oil⁶ | 5 | 5 |
| Antidegradants⁷ | 3.5 | 3.5 |
| Waxes | 2 | 2 |
| Resin⁸ | 5 | 5 |
| Resin⁹ | 12 | 12 |
| Fatty acid soap | 1 | 1 |
| Stearic Acid | 2.5 | 2.5 |
| Carbon black | 1 | 1 |
| Rosin | 3 | 3 |
| Zinc Oxide | 2.5 | 2.5 |
| Accelerators ¹⁰ | 5 | 5 |
| Sulfur | 1.5 | 1.5 |

| | | |
|---|---|---|
| ¹ oil-extended, solution polymerized styrene-butadiene rubber, extended by 37.5 phr oil per 100 parts of solution polymerized styrene-butadiene rubber; with a Tg of -14°C; with a styrene microstructure content of 34% and a vinyl microstructure content of 38% (RHC) and a weight average molecular weight Mw of 1200000 g/mol as Tufdene^{™} E680 from the company Asahi; ² oil-extended, solution polymerized styrene-butadiene rubber, extended by 25 phr oil per 100 parts of solution polymerized styrene-butadiene rubber; with a Tg of -14°C; with a styrene microstructure content of 34% and a vinyl microstructure content of 38% (RHC) and a weight average molecular weight Mw of 940000 g/mol, end-chain amino silane functionalized; ³ cis-1,4 polybutadienes as Budene^{™} 1223 from Goodyear Chemical; ⁴ as Zeosil Premium^{™} 200 MP silica from the company Solvay; ⁵ as SI266^{™} from the company Evonik; ⁶ TDAE Oil; ⁷ phenylene-diamines and 2,2,4-trimethyl-1,2-dihydroquinoline ⁸ octylphenol formaldehyde resin as SP-1068 from SI Group ⁹ alpha-methyl styrene resin as Novares Pure 85 AS, Ruetgers ¹⁰ including n-tert-butyl-2-benzothiazolesulfenamde, diphenylguanidine, 1,6-bis-(n,n dibenzylthiocarbamoyldithio) hexane | | |

Below Table 2 shows measurements of physical properties of the compositions provided in Table 1 above after curing. The Inventive Example has a significantly lower tangent delta value than the Control Sample. The rebound value of the Inventive Example is higher than the rebound value of the Control Sample. Both these indicators suggest that the rolling resistance of the composition will be reduced significantly. The measured abrasion value has also been reduced in the Inventive Example compared to the Control Sample. In summary, tangent delta, rebound and abrasion values have been improved in the Inventive Example over the Control composition.

**TABLE 2**

| **Property** | **Control Sample** | **Inventive Example** |
|---|---|---|
| Tangent Delta^{a} | 0.35 | 0.33 |
| Rebound [%]^{b} | 40.1 | 42.6 |
| Abrasion [mm³]^{c} | 171 | 162 |

| | | |
|---|---|---|
| ^{a} tan delta has been measured at 12% strain, frequency 7.8 Hz, and 30°C on a METRAVIB^{™} analyzer ^{b} rebound values have been measured on a Zwick Roell^{™} 5109 rebound resilience tester according to DIN 53512 at a temperature of 60°C ^{c} rotary drum abrasion test according to ASTM D5963 or equivalent providing a relative volume loss | | |

## Claims

1. A rubber composition comprising:
80 phr to 100 phr of at least one solution polymerized styrene-butadiene rubber,
0 phr to 20 phr of at least one polybutadiene,
55 phr to 200 phr of a filler,
at least 15 phr of oil,
wherein the filler to oil ratio by weight is between 3.5:1 and 8:1, and wherein the weight average molecular weight (Mw) of the at least one solution polymerized styrene-butadiene rubber is within a range of 400,000 to 1,000,000.

2. The rubber composition according to claim 1, wherein the at least one solution polymerized styrene-butadiene rubber has a styrene microstructure content within a range of 20% to 50% and a vinyl microstructure content within a range of 10% to 50%.

3. The rubber composition according to claim 1 or 2, wherein the rubber composition comprises between 15 phr and 45 phr of oil.

4. The rubber composition according to one or more of the preceding claims, wherein the at least one solution polymerized styrene-butadiene rubber is end functionalized, preferably with an aminosilane group and/or an aminosiloxane group.

5. The rubber composition according to one or more of the preceding claims, comprising at least two solution polymerized styrene-butadiene rubbers wherein a first solution polymerized styrene-butadiene rubber has a glass transition temperature within a range of -20°C to -89°C and a second solution polymerized styrene-butadiene rubber has glass transition temperature within a range of -5°C and -35°C.

6. The rubber composition according to one or more of the preceding claims,
wherein the rubber composition comprises from 5 phr to 15 phr of polybutadiene;
and/or wherein the polybutadiene has a glass transition temperature within a range of -90°C to -110°C, preferably from -101°C to -109°C.

7. The rubber composition according to one or more of the preceding claims,
wherein the rubber composition comprises at least 90 phr of silica; and/or
wherein at least 70% of the filler by weight is silica.

8. The rubber composition according to one or more of the preceding claims, wherein the at least one solution polymerized styrene-butadiene rubber is an oil-extended solution polymerized styrene-butadiene rubber and wherein said oil extension is at most 35 parts per 100 parts of the solution polymerized styrene-butadiene rubber, all by weight.

9. The rubber composition of claim 8, wherein said oil extension is within a range of 5 to 35 parts per 100 parts of the solution polymerized styrene-butadiene rubber, all by weight; and/or said oil extension is one or more of at most 30 parts and at least 10 parts per 100 parts of the solution polymerized styrene-butadiene rubber.

10. The rubber composition according to one or more of the preceding claims, wherein the at least one solution polymerized styrene-butadiene rubber is oil-extended and at least 70% of the oil in the rubber composition is extension oil of the solution polymerized styrene-butadiene rubber.

11. The rubber composition according to one or more of the preceding claims, wherein the rubber composition is a sulfur-vulcanizable rubber composition.

12. The rubber composition according to one or more of the preceding claims, further comprising from 10 phr to 50 phr of a resin, preferably a hydrocarbon resin, and wherein the resin is optionally selected from at least one of styrene/alphamethylstyrene resin, coumarone-indene resin, petroleum hydrocarbon resin, terpene polymer, terpene phenol resin and rosin derived resin and copolymers thereof and hydrogenated rosin acid.

13. The rubber composition according one or more of the preceding claims, wherein the rubber composition comprises at least one resin, and wherein a ratio by weight of resin to oil is within a range of 1 : 1 to 1 : 3.

14. A tire (1) comprising a rubber composition according to one or more of the preceding claims, preferably in its tire tread (10).

15. A method of making a rubber composition, preferably a rubber composition according to one or more of claims 1 to 13, the method comprising at least the following steps:
a) providing at least one oil-extended solution polymerized styrene-butadiene rubber, said solution polymerized styrene-butadiene rubber having a weight average molecular weight Mw of at most 1 000 000 g/mol; and
b) mixing said oil-extended solution polymerized styrene-butadiene rubber with a filler, wherein a ratio of the filler and said oil is between 3.5 : 1 and 8:1.
